# EUROPÄISCHE PATENTSCHRIFT

(11) **EP 2 981 472 B1**
(45) Veröffentlichungstag und Bekanntmachung des Hinweises auf die Patenterteilung: **29.11.2017**
(21) Anmeldenummer: 14708056.8
(22) Anmeldetag: 06.03.2014
(51) Int. Cl.: B65B 43/18, B65B 43/30, B65G 47/84

(54) **TRANSPORTVORRICHTUNG ZUM TRANSPORTIEREN VON VERPACKUNGEN**
TRANSPORT DEVICE FOR CONVEYING PACKAGES
DISPOSITIF DE TRANSPORT POUR TRANSPORTER DES EMBALLAGES

(30) Priorität: 02.04.2013 DE 102013205809
(43) Veröffentlichungstag der Anmeldung: 10.02.2016
(73) Patentinhaber: ROBERT BOSCH GMBH, 70442 Stuttgart (DE)
(72) Erfinder: Weis, Josef, 69226 Nussloch (DE)
(86) Internationale Anmeldenummer: PCT/EP2014/054348
(87) Internationale Veröffentlichungsnummer: WO 2014/161699

(56) Entgegenhaltungen:
- EP-A1- 0 769 459
- EP-A1- 2 108 604
- EP-A2- 1 136 363
- EP-B1- 1 594 745
- EP-B1- 1 910 171
- WO-A1-2012/101589
- DE-A1- 4 439 723
- US-A- 5 102 385
- US-B2- 7 695 421

## Beschreibung

### Stand der Technik

Die vorliegende Erfindung betrifft eine Transportvorrichtung zum Transportieren von Verpackungen, insbesondere von flachen Verpackungen, wobei die flachen Verpackungen insbesondere aus einem Magazin abgezogen und gegebenenfalls aufgerichtet werden.

Transportvorrichtungen sind aus dem Stand der Technik in unterschiedlichen Ausgestaltungen bekannt. Insbesondere in der Verpackungstechnik müssen hierbei flache Verpackungen zu einem Transportsystem zugeführt und aufgerichtet werden. Hierbei muss eine hohe Leistungsanforderung mit bis zu 500 Verpackungen pro Minute und eine große Formatflexibilität vorhanden sein, da die Verpackungsgrößen, beispielsweise von Kartonschachteln für Medikamente, ständig geändert werden. Nach dem Aufrichten werden die aufgerichteten Verpackungen beispielsweise einem Transportband zugeführt, in welchem dann ein Produkt eingeschoben wird. Hierbei können häufig Probleme bei der Übergabe der Verpackungen auf das Transportband vorkommen. Ferner sind die bekannten Lösungen relativ großbauend und insbesondere sehr komplex, was auch ihre Herstellung verteuert.

Weiterhin ist aus der EP 1 594 745 B1 eine Transportvorrichtung gemäß dem Oberbegriff des Anspruchs 1 bekannt.

### Offenbarung der Erfindung

Die erfindungsgemäße Transportvorrichtung zum Transportieren von Verpackungen mit den Merkmalen des Anspruches 1 weist demgegenüber den Vorteil eines einfachen und kompakten Aufbaues auf. Ferner kann die erfindungsgemäße Transportvorrichtung relativ einfach hergestellt werden. Darüber hinaus kann eine schnelle Anpassung an unterschiedliche Formatgrößen und/oder an unterschiedliche Geschwindigkeiten von Fördereinrichtungen, die der erfindungsgemäßen Transportvorrichtung nachgeschaltet sind, möglich sind. Der erfindungsgemäße Aufbau der Transportvorrichtung ermöglicht es dabei, dass nur kurze Umrüstzeiten für eine Formatumstellung auf eine andere Verpackungsgröße notwendig sind. Auch ist es erfindungsgemäß möglich, dass mehrere Abzugseinrichtungen vorgesehen sind, so dass auch eine hohe Ausbringungsmenge von Verpackungen möglich ist. Dies wird erfindungsgemäß dadurch erreicht, dass die Transportvorrichtung neben wenigstens einer Abzugseinrichtung zum Entnehmen und Transportieren von Verpackungen eine erste, ortsfeste Kulissenbahn aufweist. Die Kulissenbahn führt dabei die Abzugseinrichtung derart, dass die Abzugseinrichtung eine Kurvenbahn ausführt, welche eine Entnahmespitze aufweist. Eine Verpackung wird dabei durch die Abzugseinrichtung an der Entnahmespitze von einem Stapel oder dgl. entnommen. Ferner ist erfindungsgemäß eine umlaufende Trägereinrichtung mit separatem Antrieb vorgesehen, welche eine geschlossene, umlaufende Transportstrecke definiert, über welche die Abzugseinrichtung bewegt wird. Die Abzugseinrichtung ist dabei mit der Trägereinrichtung verbunden. Ferner ist die Abzugseinrichtung schwenkbar an der Kulissenbahn gelagert, um die Entnahmespitze der Kurvenbahn durch Schwenken zu bilden. Vorzugsweise wird die Abzugseinrichtung dabei in Bewegungsrichtung vorwärts (vor der Entnahmespitze) und in Bewegungsrichtung rückwärts (nach der Entnahmespitze) um die Nulllage geschwenkt. Weiter umfasst die Transportvorrichtung eine zweite ortsfeste Kulissenbahn und eine Aufrichteeinheit mit einem Aufrichteorgan. Die Aufrichteeinheit ist dabei mit der zweiten Kulissenbahn verbunden, um das Aufrichten des Aufrichteorgans zu bewerkstelligen. Das Aufrichteorgan wird dabei dazu verwendet, flach liegende Verpackungen aufzurichten. Die Verpackungen sind besonders bevorzugt flache Kartonzuschnitte, welche durch das Aufrichteorgan aufgerichtet werden können.

Die Unteransprüche zeigen bevorzugte Weiterbildungen der Erfindung.

Vorzugsweise weist die Transportvorrichtung eine Vielzahl von Abzugseinrichtungen auf, welche an der Trägereinrichtung angeordnet sind. Hierdurch kann eine hohe Ausbringungsmenge von Verpackungen durch die erfindungsgemäße Transportvorrichtung sichergestellt werden.

Weiter bevorzugt umfasst jede Abzugseinrichtung eine Kurvenrolle, welche formschlüssig an der ersten Kulissenbahn umläuft. Hierdurch kann insbesondere eine zusätzliche Führung der Abzugseinrichtungen über die jeweilige Kurvenrolle erhalten werden.

Gemäß einer weiteren bevorzugten Ausgestaltung der vorliegenden Erfindung weist die Abzugseinrichtung eine seitlich über die Trägereinrichtung vorstehende Abzugswelle auf, so dass die Abzugseinrichtung seitlich an der Trägereinrichtung umläuft. Eine Verbindung mit der Trägereinrichtung ist dabei über die Welle vorhanden. Hierdurch kann insbesondere ein besonders kompakter Aufbau erreicht werden, da die Trägereinrichtung Bewegungen der Abzugseinrichtungen nicht stört und somit ein besonders flacher Aufbau der Transportvorrichtung möglich ist.

Besonders bevorzugt steht die Aufrichteeinheit ebenfalls seitlich über der Trägereinrichtung vor, wobei die Aufrichteeinheit eine seitlich überstehende Aufrichtewelle und eine Kurvenrolle umfasst, welche formschlüssig mit der zweiten Kulissenbahn verbunden ist.

Die Trägereinrichtung ist erfindungsgemäß ein Zahnriemen oder eine Rollenkette. Weiter bevorzugt ist eine Transportstrecke der Trägereinrichtung ovalförmig, besonders bevorzugt durch zwei Halbkreise und zwei die Halbkreise verbindenden Geraden gebildet. Vorzugsweise umfasst die Transportvorrichtung ferner ein nachgeordnetes, zweites Transportsystem, an welches die Verpackungen abgegeben werden. Das nachgeordnete, zweite Transportsystem ist dabei zumindest teilweise parallel zu einer der Geraden der ovalförmigen Bewegungsstrecke der Transportvorrichtung. Hierdurch wird erreicht, dass eine gerade, längere Übergabestrecke zwischen der Transportvorrichtung und dem nachgeordneten, zweiten Transportsystem bereitgestellt wird. Besonders bevorzugt ist die Übergabestrecke dabei so lang, wie die Gerade der ovalförmigen Bewegungsstrecke an der Transportvorrichtung ist. Somit kann eine funktionssichere Übergabe der Verpackung auf das nachgeordnete, zweite Transportsystem erfolgen. Hierdurch ist insbesondere eine sichere Übergabe der Verpackungen möglich, insbesondere, wenn die Verpackungen aufgerichtete Faltschachteln, z.B. aus Karton, sind, wobei bei der Übergabe sichergestellt werden muss, dass die aufgefalteten Faltschachteln durch die Übergabe nicht wieder teilweise oder vollständig zusammengedrückt werden.

Eine besonders kompakte und stabile Anordnung ergibt sich, wenn die umlaufende Trägereinrichtung zwischen der ersten und zweiten Kulissenbahn angeordnet ist.

Weiter bevorzugt ist die Abzugseinrichtung ein Vakuumsauger oder dgl.

Gemäß einer weiteren bevorzugten Ausgestaltung der vorliegenden Erfindung ist an der Transportstrecke zusätzlich noch ein ortsfester Vakuumsauger angeordnet, welcher die durch die Abzugseinrichtung entnommene Verpackung aufrichtet oder die Aufrichtung zusätzlich unterstützt.

Besonders bevorzugt ist die Transportvorrichtung derart aufgebaut, dass die erste Kulissenbahn einen vorstehenden Bereich aufweist, dessen Position am Umfang der Kulissenbahn mit einer Position der Entnahmespitze in der Kurvenbahn der Abzugseinrichtung zum Entnehmen der Verpackung durch die Abzugseinrichtung auseinanderfällt. Hierdurch kann eine weitere Bauraumoptimierung ermöglicht werden.

Weiter bevorzugt ist die Trägereinrichtung mittels des separaten Antriebs unabhängig antreibbar. Der separate Antrieb hat ferner den Vorteil, dass bei Umrüstungen auf andere Verpackungsgrößen oder dgl. die Transportvorrichtung problemlos an andere Fördergeschwindigkeiten angepasst werden kann, so dass immer eine synchrone Abgabe der Verpackungen an eine nachfolgende Einheit möglich ist.

Weiter bevorzugt umfasst die Transportvorrichtung zusätzliche Bearbeitungsstationen zur Bearbeitung der aufgenommenen Verpackungen. Die zusätzlichen Bearbeitungsstationen sind dabei entlang der Transportstrecke der Transportvorrichtung angeordnet. Als zusätzliche Bearbeitungsstationen können beispielsweise eine Beschriftungsstation zur Beschriftung der Verpackung, eine Ausscheidestation, um beschädigte Verpackungen auszustoßen, eine Füllstation, um beispielsweise Packzettel oder dgl. in die aufgerichtete Verpackung einzubringen, oder eine Handlingsstation, um beispielsweise Verschlusslaschen der Verpackung in eine Offenstellung zu bringen, vorgesehen sein.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Seitenansicht einer Transportvorrichtung gemäß einem Ausführungsbeispiel der Erfindung, und
- Figur 2: eine schematische, perspektivische Ansicht der Transportvorrichtung von Figur 1.

### Bevorzugte Ausführungsform der Erfindung

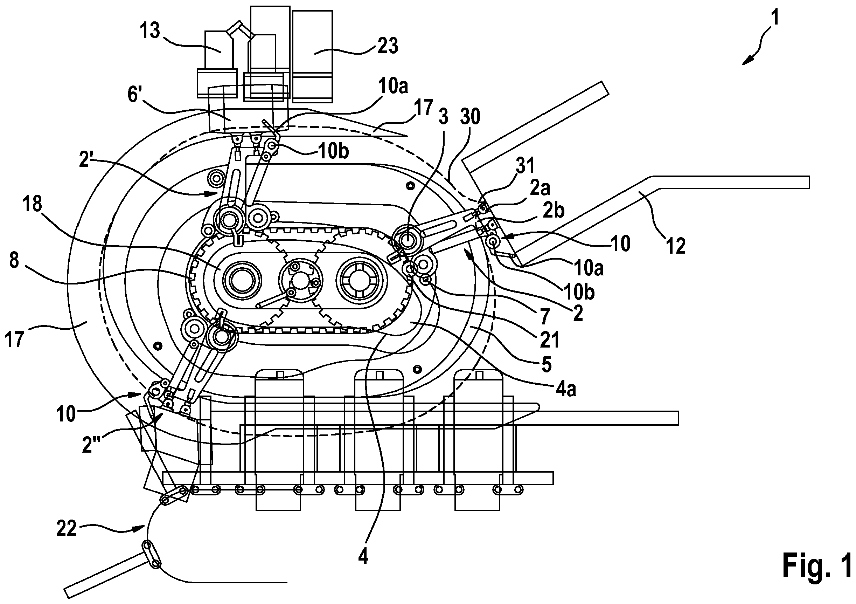

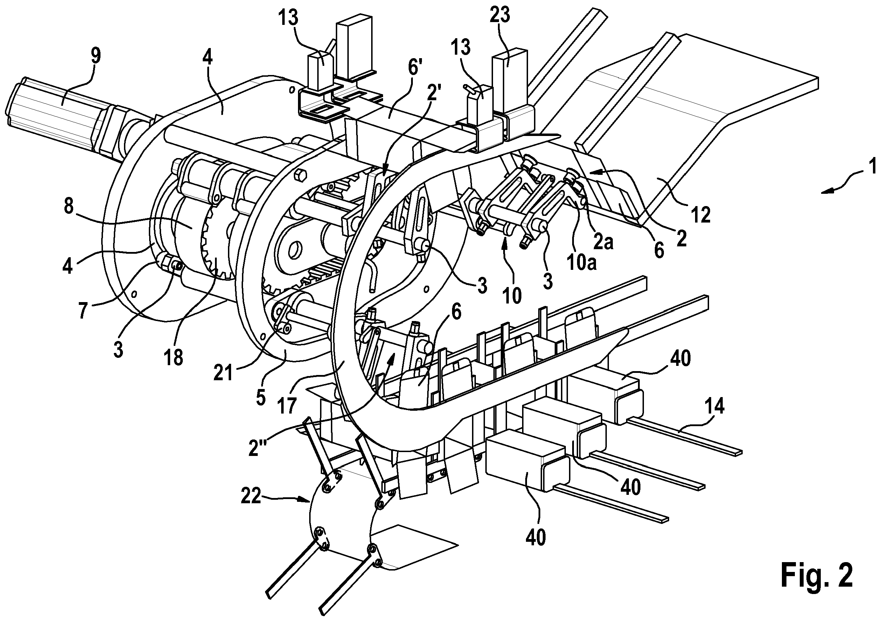

Nachfolgend wird unter Bezugnahme auf die Figuren 1 und 2 eine Transportvorrichtung 1 gemäß einem bevorzugten Ausführungsbeispiel der Erfindung im Detail beschrieben.

Die Transportvorrichtung 1 ist zum Abziehen und Aufrichten von flachen Verpackungen 6, welche in einem Magazin 12 angeordnet sind, ausgelegt. Die Transportvorrichtung 1 umfasst eine Vielzahl von Abzugseinrichtungen 2, 2', 2", welche jeweils eine Verpackung 6 aus dem Magazin 12 entnehmen und entlang einer Transportstrecke transportieren. Die Transportstrecke wird durch eine umlaufende Trägereinrichtung 8 definiert, welche in diesem Ausführungsbeispiel ein breiter Zahnriemen ist.

Die Transportvorrichtung 1 umfasst ferner eine erste, ortsfeste Kulissenbahn 4, an welcher die Abzugseinrichtungen 2, 2', 2" geführt sind. Die erste Kulissenbahn 4 führt dabei die Abzugseinrichtungen 2, 2', 2" derart, dass die Abzugseinrichtungen eine Kurvenbahn 30 ausführen, welche an einem Entnahmeort, d.h., am Magazin 12, eine Entnahmespitze 31 bildet, um die Verpackungen aus dem Magazin 12 zu entnehmen. Die Trägereinrichtung 8 ist dabei mittels eines separat ansteuerbaren Antriebs 9 antreibbar. Die Abzugseinrichtungen sind dabei mit der Trägereinrichtung 8 verbunden. Weiter sind die Abzugseinrichtungen 2 schwenkbar gelagert, um die Entnahmespitze 31 der Kurvenbahn 30 zu bilden.

Wie aus den Figuren ersichtlich ist, umfasst die Abzugseinrichtung 2 eine Vielzahl von Saugern 2a, einen Halter 2b, an welchem die Sauger 2a angeordnet sind, und eine Abzugswelle 3, an welcher der Halter 2b angeordnet ist. An der Abzugswelle 3 ist ferner eine Kurvenrolle 7 angeordnet, welche die Schwenkbewegung des Halters 2b zum Bilden der Entnahmespitze ermöglicht.

Die Transportvorrichtung 1 umfasst ferner eine Aufrichteeinheit 10 mit einem Aufrichteorgan 10a und einer Aufrichtewelle 10b. Das Aufrichteorgan 10a umfasst eine Mechanik und einen an der Mechanik angeordneten Finger, welcher mit der Verpackung 6 in Kontakt kommt und die Verpackung 6 aufrichtet bzw. aufdrückt. In Figur 1 und 2 ist die aufgedrückte Verpackung mit dem Bezugszeichen 6' bezeichnet.

Um die Verpackung aufzurichten, ist ferner eine zweite, ortsfeste Kulissenbahn 5 vorgesehen, an welcher eine Kurvenrolle 21 formschlüssig umläuft, um die Bewegung der Aufrichteeinheit 10 zu erzeugen.

Die Transportvorrichtung 1 umfasst an der Trägereinrichtung 8 ferner zusätzliche Bearbeitungsstationen 13. Beispielhaft ist hierbei ein Codeleser dargestellt. Es können jedoch noch andere Bearbeitungsstationen, wie beispielsweise eine Bedruckungsstation 23 oder eine Einlegestation (nicht gezeigt), um beispielsweise Beipackzettel oder dgl. einzulegen, usw., vorgesehen werden.

Ferner ist an der Transportvorrichtung 1 eine Laschenweiche 17 vorgesehen, welche durch einen spitz zulaufenden Einlauf ein Aufhalten der Laschen der Verpackung sicherstellt. Die Laschenweiche 17 hat dabei eine U-förmige Form (vgl. Figur 2).

Die Trägereinrichtung 8 wird über ein Zahnriemenrad 18, welches mit dem Antrieb 9 verbunden ist, angetrieben.

Unterhalb der erfindungsgemäßen Transportvorrichtung 1 ist ferner noch ein weiteres Transportsystem 22 dargestellt, wobei die Abzugseinrichtungen 2 die geöffneten Verpackungen 6 in formschlüssige Mitnehmer des Transportsystems 22 einlegen. Zu verpackende Produkte 40 werden dann mittels Einschubstößeln 14 in die geöffneten Verpackungen eingeschoben.

Durch den autarken Antrieb 9 kann die Transportvorrichtung 1 immer synchron zum nachgeschalteten Transportsystem 22 betrieben werden, unabhängig von etwaigen Verpackungsgrößen bzw. Geschwindigkeiten des Transportsystems 22.

Ferner ist es möglich, eine Vielzahl von Abzugseinrichtungen 2, 2', 2" anzuordnen, und so eine hohe Ausbringungsmenge von Verpackungen sicherzustellen. Die Abzugseinrichtungen können dabei flexibel an der Transporteinrichtung 8 angebracht bzw. von dieser gelöst werden. Dadurch können insbesondere bei Formatumstellung kurze Umrüstzeiten sichergestellt werden.

Die Funktion der Transportvorrichtung 1 ist dabei derart, dass die Abzugseinrichtung 2 über die Abzugswelle 3 an der ersten Kulissenbahn 4 geführt ist. Hierbei weist die erste Kulissenbahn 4 einen vorstehenden Bereich 4a auf, an welchem die Welle 3 der Abzugseinrichtung 2 gedreht wird. Hierdurch führt die Abzugseinrichtung 2 zuerst eine Drehung in eine erste Richtung (in Bewegungsrichtung vorwärts) und nach Überlaufen des vorstehenden Bereichs 4a eine Drehung in eine zweite Richtung (in Bewegungsrichtung rückwärts) aus, so dass die beschriebene Entnahmespitze 31 in der Kurvenbahn 30 der Abzugseinrichtung gebildet wird. Hierbei liegt die Entnahmespitze 31 genau an dem Entnahmeort, d.h., am Magazin 12, für die Verpackungen 6, so dass die Abzugseinrichtung 2 eine Verpackung 6 ansaugen und mitnehmen kann.

Nach dem Ansaugen der Verpackung 6 läuft die Kurvenrolle 21 der Aufrichteeinheit 10 an der zweiten Kulissenbahn 5 derart, dass das Aufrichteorgan 10a die zusammengefaltete Packung aufrichtet. In Figur 2 ist der aufgerichtete Zustand der Verpackung mit 6' bezeichnet. Hierbei laufen die Laschen der Verpackung auch über die spitze Laschenweiche 17, so dass die Laschen dann im aufgerichteten (aufgeklappten) Zustand der Verpackung auf Auflageelementen aufliegen. In dieser Position kann dann eine Bedruckung an der Bedruckungsstation 23 oder ein Auslesen eines Codes oder dgl. erfolgen.

Zur Bewegung der Abzugseinrichtung 2 und der Aufrichteeinheit 10 sind dabei jeweils Wellen vorgesehen. Wie insbesondere aus Figur 2 ersichtlich ist, ist der Aufbau der Transportvorrichtung 1 derart, dass die Trägereinrichtung 8 zwischen der ersten Kulissenbahn 4 und der zweiten Kulissenbahn 5 angeordnet ist. Die Abzugswelle 3 und die Aufrichtewelle 10b sind dabei derart vorgesehen, dass sie jeweils mit der Trägereinrichtung 8 in Verbindung stehen, um die ovalförmige umlaufende Bewegung entlang der Transportstrecke auszuführen und um seitlich von der Trägereinrichtung 8 vorzustehen.

Dadurch wird die Verpackung nicht auf der Ebene der Trägereinrichtung 8 bewegt, sondern auf einer Parallelebene zur Trägereinrichtung 8 (seitlich davon, vgl. Figur 2). Dadurch kann auch eine sehr einfache Übergabe auf die das nachgeschaltete Transportsystem 22 ermöglicht werden. Ferner können insbesondere die Halter und die Mechanik der Aufrichteeinheit 10, die entsprechend durch die Kulissenbahnen 4, 5 vorgegebenen Bewegungen ausführen, ohne dass diese dabei in Konflikt mit der Trägereinrichtung 8 kommen würden. Die erfindungsgemäße Lösung mit den seitlich vorstehenden Wellen ist dabei sowohl einfach als auch kompakt, so dass insbesondere die gesamte Transportvorrichtung 1 sehr flachbauend ausgeführt werden kann.

Ferner sind erfindungsgemäß zur Ausbildung der Entnahmespitze 31 keinerlei komplizierte Zykloidensysteme oder dgl. notwendig. Anpassungen der Umlaufgeschwindigkeit können einfach durch Ansteuerung des autarken Antriebs 9 ermöglicht werden, ohne dass sich hierdurch Verkomplizierungen beim Ablauf ergeben. Der Abzugs- und Aufrichtevorgang bleibt dabei übersichtlich und gleichzeitig kann auch eine sehr schonende Behandlung der Verpackungen 6 sichergestellt werden, so dass ein Ausschuss durch unsachgemäße Handhabung beim Aufrichten ausgeschlossen werden kann.

Ein weiterer großer Vorteil der erfindungsgemäßen Transporteinrichtung ist, dass diese unabhängig von einer Lage bzw. einer Vorspannung der z.B. als Faltschachtel vorgesehenen Verpackung ist.

Die ovale Bewegungsbahn der Abzugseinrichtungen 2, 2', 2" wird dabei durch zwei Halbkreise und zwei die Halbkreise miteinander verbindende Geraden bestimmt. Für eine funktionssichere Übergabe der aufgerichteten Verpackung 6 ist dabei das nachgeordnete, zweite Transportsystem 22 teilweise parallel zu einer die beiden Halbkreise der ovalförmigen Bewegungsbahn verbindenden Geraden. Hierbei ist, wie aus Figur 1 ersichtlich ist, das nachgeordnete, zweite Transportsystem 22 unterhalb der ovalförmigen Bewegungsstrecke der Transportvorrichtung 1 angeordnet. Hierdurch ergibt sich eine lange, gerade Übergabestrecke, in welcher die in diesem Ausführungsbeispiel als Faltschachteln vorgesehenen Verpackungen übergeben werden. Hierbei ist insbesondere vorteilhaft, dass die Faltschachteln im aufgerichteten Zustand auf das nachgeordnete, zweite Transportsystem 22 übergeben werden können, wobei eine formschlüssige Übergabe zu Beginn der geraden Strecke des nachgeordneten, zweiten Transportsystems 22 möglich ist. In diesem Ausführungsbeispiel ist die Übergabestrecke dabei auf einer Länge vorgesehen, welche der Geraden der ovalförmigen Bewegungsstrecke entspricht.

Weiterhin kann erfindungsgemäß die Entnahme und das Aufrichten der Verpackung 6 in einem kontinuierlichen Durchlauf sichergestellt werden, so dass die synchrone Abgabe immer gewährleistet ist. Gegebenenfalls kann noch eine zusätzliche ortsfeste Saugeinrichtung vorgesehen werden, um ein sicheres und vollständiges Aufrichten der zusammengefalteten Verpackung 6 sicherzustellen.

## Patentansprüche

1. Transportvorrichtung zum Transportieren von Verpackungen (6), umfassend:
- wenigstens eine Abzugseinrichtung (2) zum Entnehmen und Transportieren der Verpackungen (6),
- eine erste, ortsfeste Kulissenbahn (4), an welcher die Abzugseinrichtung (2) geführt ist, wobei die erste Kulissenbahn (4) die Abzugseinrichtung (2) derart führt, dass die Abzugseinrichtung (2) eine Kurvenbahn (30) ausführt, und
- eine umlaufende Trägereinrichtung (8), welche eine Bewegung entlang einer umlaufend geschlossenen Transportstrecke ausführt, wobei die Trägereinrichtung (8) mittels eines autarken Antriebs (9) antreibbar ist und wobei die Trägereinrichtung (8) mit der Abzugseinrichtung (2) verbunden ist, um die Abzugseinrichtung (2) zu bewegen,
wobei die Kurvenbahn (30) an einem Entnahmeort zur Entnahme der Verpackung (6) eine Entnahmespitze (31) aufweist,
- wobei die Abzugseinrichtung (2) schwenkbar angeordnet ist, um die Entnahmespitze (31) der Kurvenbahn auszuführen, und
- wobei eine zweite ortsfeste Kulissenbahn (5) und eine Aufrichteeinheit (10) vorgesehen ist, wobei die Aufrichteeinheit (10) ein Aufrichteorgan (10a) aufweist und an der zweiten Kulissenbahn (5) geführt ist, um das Aufrichteorgan (10a) mit der aufgenommenen Verpackung (6) in Kontakt zu bringen und die Verpackung (6) aufzurichten,
**dadurch gekennzeichnet, dass**
- die Trägereinrichtung (8) einen Zahnriemen oder eine Rollenkette umfasst.

2. Vorrichtung nach Anspruch 1, **gekennzeichnet durch** eine Vielzahl von Abzugseinrichtungen (2, 2', 2"), welche an der Trägereinrichtung (8) angeordnet sind.

3. Vorrichtung nach einem der vorhergehenden Ansprüche, **dadurch gekennzeichnet, dass** die Abzugseinrichtung (2) eine Kurvenrolle (7) umfasst, welche formschlüssig an der ersten Kulissenbahn (4) umläuft.

4. Vorrichtung nach einem der vorhergehenden Ansprüche, **dadurch gekennzeichnet, dass** die Abzugseinrichtung (2) eine seitlich über die Trägereinrichtung (8) vorstehende Abzugswelle (3) aufweist.

5. Vorrichtung nach Anspruch 1, **dadurch gekennzeichnet, dass** die Aufrichteeinheit (10) eine seitlich über die Trägereinrichtung (8) vorstehende Aufrichtewelle (10b) und eine Kurvenrolle (21) umfasst, wobei die Kurvenrolle (21) an der zweiten Kulissenbahn (5) geführt ist.

6. Vorrichtung nach einem der vorhergehenden Ansprüche, **dadurch gekennzeichnet, dass** die Bewegungsstrecke ovalförmig mit zwei Halbkreisen und zwei die Halbkreise verbinden Geraden ist.

7. Vorrichtung nach Anspruch 6, ferner umfassend ein nachgeordnetes, zweites Transportsystems (22), an welches die Verpackungen (6) abgegeben werden, wobei das nachgeordnete, zweite Transportsystem (22) zumindest teilweise parallel zu einer der Geraden der ovalförmigen Bewegungsstrecke ist.

8. Vorrichtung nach einem der vorhergehenden Ansprüche, **dadurch gekennzeichnet, dass** die Trägereinrichtung (8) zwischen der ersten Kulissenbahn (4) und der zweiten Kulissenbahn (5) angeordnet ist.

9. Vorrichtung nach einem der vorhergehenden Ansprüche, **gekennzeichnet durch** eine ortsfest an der Transportstrecke angeordnete Saugeinrichtung, welche die durch die Abzugseinrichtung (2) entnommene Verpackung (6) aufrichtet oder deren Aufrichtung unterstützt.

10. Vorrichtung nach einem der vorhergehenden Ansprüche, **dadurch gekennzeichnet, dass** die erste Kulissenbahn (4) einen vorstehenden Bereich (4a) aufweist, dessen Position am Umfang der Kulissenbahn (4) mit einer Position der Entnahmespitze (31) in der Kurvenbahn der Abzugseinrichtung (2) auseinander fällt.

## Claims

1. Transporting apparatus for transporting packs (6), comprising:
- at least one takeoff device (2) for removing and transporting the packs (6),
- a first, fixed-location guide track (4), on which the takeoff device (2) is guided, wherein the first guide track (4) guides the takeoff device (2) such that the takeoff device (2) follows a curved path (30), and
- a circulating carrier device (8), which executes a movement along a transporting route which is closed all the way round, wherein the carrier device (8) can be driven by means of an autonomous drive (9), and wherein the carrier device (8) is connected to the takeoff device (2) in order to move the takeoff device (2),
wherein the curved track (30) has a removal tip (31) at a removal location for removing the pack (6),
- wherein the takeoff device (2) is arranged in a pivotable manner in order to form the removal tip (31) of the curved track, and
- wherein a second fixed-location guide track (5) and an erecting unit (10) are provided, wherein the erecting unit (10) has an erecting member (10a) and is guided on the second guide track (5) in order to bring the erecting member (10a) into contact with the pack (6) picked up and to erect the pack (6),
**characterized in that**
- the carrier device (8) comprises a toothed belt or a roller chain.

2. Apparatus according to Claim 1, **characterized by** a multiplicity of takeoff devices (2, 2', 2''), which are arranged on the carrier device (8).

3. Apparatus according to either of the preceding claims, **characterized in that** the takeoff device (2) comprises a track roller (7), which circulates in a form-fitting manner on the first guide track (4) .

4. Apparatus according to one of the preceding claims, **characterized in that** the takeoff device (2) has a takeoff shaft (3) projecting laterally beyond the carrier device (8).

5. Apparatus according to Claim 1, **characterized in that** the erecting unit (10) comprises an erecting shaft (10b), which projects laterally beyond the carrier device (8), and a track roller (21), wherein the track roller (21) is guided on the second guide track (5).

6. Apparatus according to one of the preceding claims, **characterized in that** the movement route is oval with two semicircles and two straight lines connecting the semicircles.

7. Apparatus according to Claim 6, further comprising a downstream, second transporting system (22), onto which the packs (6) are discharged, wherein at least part of the downstream, second transporting system (22) is parallel to one of the straight lines of the oval movement route.

8. Apparatus according to one of the preceding claims, **characterized in that** the carrier device (8) is arranged between the first guide track (4) and the second guide track (5).

9. Apparatus according to one of the preceding claims, **characterized by** a suction device, which is arranged at a fixed location of the transporting route and erects, or assists the operation of erecting, the pack (6) removed by the takeoff device (2).

10. Apparatus according to one of the preceding claims, **characterized in that** the first guide track (4) has a projecting region (4a), of which the position on the circumference of the guide track (4) coincides with a position of the removal tip (31) in the curved path of the takeoff device (2) .

## Revendications

1. Dispositif de transport pour transporter des emballages (6), comprenant :
- au moins un dispositif d'extraction (2) pour prélever et transporter les emballages (6),
- une première voie de coulisse fixe (4) sur laquelle est guidé le dispositif d'extraction (2), la première voie de coulisse (4) guidant le dispositif d'extraction (2) de telle sorte que le dispositif d'extraction (2) effectue une trajectoire courbe (30), et
- un dispositif de support périphérique (8) qui effectue un mouvement le long d'une section de transport en circuit fermé, le dispositif de support (8) pouvant être entraîné au moyen d'un entraînement autonome (9) et le dispositif de support (8) étant raccordé au dispositif d'extraction (2) pour déplacer le dispositif d'extraction (2),
la trajectoire courbe (30) présentant une pointe de prélèvement (31) au niveau d'un lieu de prélèvement pour prélever l'emballage (6),
- le dispositif d'extraction (2) étant disposé de manière pivotante afin de réaliser la pointe de prélèvement (31) de la trajectoire courbe, et
- une deuxième voie de coulisse fixe (5) et une unité de redressement (10) étant prévues, l'unité de redressement (10) présentant un organe de redressement (10a) et étant guidée au niveau de la deuxième voie de coulisse (5), afin d'amener en contact l'organe de redressement (10a) avec l'emballage reçu (6) et de redresser l'emballage (6),
**caractérisé en ce que**
- le dispositif de support (8) comprend une courroie dentée ou une chaîne à rouleaux.

2. Dispositif selon la revendication 1, **caractérisé par** une pluralité de dispositifs d'extraction (2, 2', 2'') qui sont disposés au niveau du dispositif de support (8).

3. Dispositif selon l'une quelconque des revendications précédentes, **caractérisé en ce que** le dispositif d'extraction (2) comprend un suiveur de came (7) qui circule par engagement positif sur la première voie de coulisse (4).

4. Dispositif selon l'une quelconque des revendications précédentes, **caractérisé en ce que** le dispositif d'extraction (2) présente un arbre d'extraction (3) faisant saillie latéralement au-delà du dispositif de support (8).

5. Dispositif selon la revendication 1, **caractérisé en ce que** l'unité de redressement (10) comprend un arbre de redressement (10b) faisant saillie latéralement au-delà du dispositif de support (8) et un suiveur de came (21), le suiveur de came (21) étant guidé au niveau de la deuxième voie de coulisse (5).

6. Dispositif selon l'une quelconque des revendications précédentes, **caractérisé en ce que** la section de déplacement est en forme ovale avec deux demi-cercles et deux droites reliant les demi-cercles.

7. Dispositif selon la revendication 6, comprenant en outre un deuxième système de transport subordonné (22), au niveau duquel les emballages (6) sont déposés, le deuxième système de transport subordonné (22) étant au moins en partie parallèle à l'une des droites de la section de déplacement ovale.

8. Dispositif selon l'une quelconque des revendications précédentes, **caractérisé en ce que** le dispositif de support (8) est disposé entre la première voie de coulisse (4) et la deuxième voie de coulisse (5).

9. Dispositif selon l'une quelconque des revendications précédentes, **caractérisé par** un dispositif d'aspiration disposé fixement sur la section de transport, lequel redresse l'emballage (6) prélevé par le dispositif d'extraction (2) ou favorise son redressement.

10. Dispositif selon l'une quelconque des revendications précédentes, **caractérisé en ce que** la première voie de coulisse (4) présente une région saillante (4a) dont la position à la périphérie de la voie de coulisse (4) ne coïncide pas avec une position de la pointe de prélèvement (31) dans la voie de coulisse du dispositif d'extraction (2).
